# EUROPEAN PATENT APPLICATION

(11) **EP 3 581 690 A1**
(43) Date of publication of application: **18.12.2019**
(21) Application number: 18751594.5
(22) Date of filing: 23.01.2018
(51) Int. Cl.: D03D 1/00, B29B 11/16, D03D 5/00, D03D 11/00

(54) **FIBER STRUCTURE AND FIBER REINFORCED COMPOSITE MATERIAL**

(30) Priority: 08.02.2017 JP 2017021130
(71) Applicant: Kabushiki Kaisha Toyota Jidoshokki, Kariya-shi, Aichi 448-8671 (JP)
(72) Inventor: KAWAHARA Mari, Kariya-shi Aichi 448-8671 (JP)
(74) Representative: TBK
(86) International application number: PCT/JP2018/001963
(87) International publication number: WO 2018/147072

(57) **Abstract**

A fiber structure includes fabric-style fixing portions in first fabric edges and second fabric edges. The fabric-style fixing portions are formed by entangling discontinuous fibers of yarns overlapped in a lamination direction of the fiber structure. In addition, the fabric-style fixing portions are formed in an outermost warp of warps and an outermost weft of wefts.

## Description

### TECHNICAL FIELD

The present invention relates to a fiber structure made of a multilayer fabric having first yarns and second yarns and a fiber-reinforced composite material using the fiber structure. The first yarns and the second yarns are bundles of reinforcing fibers.

### BACKGROUND ART

Fiber-reinforced composite materials are widely used as lightweight structural materials. A fiber structure is a reinforcing base material for a fiber-reinforced composite material, and the fiber-reinforced composite material formed by combining the fiber structure with resin as a matrix is used as structural materials for airplanes, vehicles, buildings, and the like. The fiber structure is made of a multilayer fabric.

A laminated fabric as a multilayer fabric is formed by, for example, laminating several single-layer fabrics formed by plain weave. In some cases, such laminated several single-layer fabrics are joined with each other in the lamination direction to form the laminated fabrics. By the way, when the fiber structure is carried or shaped, of fabric edges of the fiber structure, for example, one fabric edge in which each ends of warps extending in a yarn main axis direction of the warps are located has a possibility of fraying. Then, wefts extending orthogonally to the warps may be pulled out from the frayed fabric edge. To prevent such fraying at the fabric edge of the fiber structure, for example, tapes are attached to fabric edges of a fiber structure in Patent Document 1.

### Citation List

### Patent Document

Patent Document 1: Japanese Patent Application Publication No. 2002-249957

### SUMMARY OF INVENTION

### Technical Problem

However, in Patent Document 1, to prevent the fraying of the fabric edge of the fiber structure, the tapes which are separate members from the fiber structure are needed, increasing costs for manufacturing the fiber structure. Furthermore, the tapes used to prevent the fraying may adversely affect the combining of the fiber structure with a matrix.

It is an objective of the present invention to provide a fiber structure and a fiber-reinforced composite material that prevent fraying of fabric edges without adding any separate members.

### Solution to Problem

To achieve the foregoing objective and in accordance with one aspect of the present invention, a fiber structure includes a multilayer fabric including first yarns and second yarns arranged orthogonally to the first yarns, the first yarns and the second yarns being bundles of reinforcing fibers. The fiber structure includes a first fabric edge of the multilayer fabric wherein ends of the first yarns are located in a yarn main axis direction of the first yarns, a second fabric edge of the multilayer fabric wherein ends of the second yarns are located in a yarn main axis direction of the second yarns, and fabric-style fixing portions disposed in at least one of the first fabric edge and the second fabric edge. The fabric-style fixing portions are formed by entangling the reinforcing fibers of yarns of the first yarns and the second yarns overlapped in a lamination direction of the multilayer fabric. The fabric-style fixing portions are formed in at least one of an outermost yarn and ends of one of the two types of yarns. Of the one of the two types of yarns arranged side by side in a yarn main axis direction of the other of the two types of yarns forming the fabric edges, the outermost yarn is located closest to the ends of the other of the two types of yarns. The ends of the one of the two types of yarns are located closer to the ends than the outermost yarn in the yarn main axis direction of the one of the two types of yarns.

With this configuration, if the fabric-style fixing portions are formed in the outermost yarn, the reinforcing fibers of each yarn overlapped with the outermost yarn in the lamination direction are entangled with each other, thereby preventing pulling out of the outermost yarn from the fabric edge. In addition, if the fabric-style fixing portions are formed in the ends of the one of the two types of yarns, the reinforcing fibers are entangled at a position closer to the ends of the one of the two types of yarns than the outermost yarn in the yarn main axis direction of the one of the two types of yarns, thereby preventing pulling out of the outermost yarn over the ends of the one of the two types of yarns. This means that forming the fabric-style fixing portions prevent the fraying in the fabric edge. The fabric-style fixing portions are formed by entangling the reinforcing fibers of yarns overlapped in the lamination direction. Therefore, no separate members are needed to prevent the fraying in the fabric edge.

The fabric-style fixing portions may be disposed only in the outermost yarn in the fiber structure.

This means that the fiber structure does not have the fabric-style fixing portions more inside than the outermost yarn extending in a yarn main axis direction of the one of the two types of yarns. This configuration minimizes twisting of the reinforcing fibers caused by forming the fabric-style fixing portions.

The first yarns and the second yarns of the fiber structure may be made of discontinuous fibers.

With this configuration, in the fabric-style fixing portions, the discontinuous fibers are entangled in many portions between the yarns overlapped in the lamination direction, thereby effectively preventing the fraying.

The fiber-reinforced composite material to solve the above issues is formed by impregnating a reinforcing base material made of a fiber structure with matrix resin. The aforesaid fiber structure corresponds to the fiber structure according to any one of claims 1 to 3.

This means that the fabric-style fixing portions prevents the fraying of the fabric edges of the fiber structure. The fabric-style fixing portions are formed by entangling the reinforcing fibers of yarns overlapped in the lamination direction. Therefore, no separate members are needed to prevent the fraying in the fabric edges. Therefore, in the fiber-reinforced composite material formed by impregnating the fiber structure with matrix resin, no separating members will adversely affect the combining of the matrix resin.

### Advantageous Effects of Invention

According to the present invention, it is possible to prevent fraying in fabric edges without adding separate members.

### BRIEF DESCRIPTION OF DRAWINGS

FIG. 1 is a view schematically showing a fiber-reinforced composite material of a present embodiment.
FIG. 2 is a partial plan view showing a fiber structure of the present embodiment.
FIG. 3 is a view of the fiber structure of the present embodiment as viewed in the direction indicated by arrow A of FIG. 2.
FIG. 4 is a view of the fiber structure of the present embodiment as viewed in the direction indicated by arrow B of FIG. 2.
FIG. 5 is an enlarged view showing a fabric-style fixing portion.
FIG. 6 is a schematic view showing a fiber structure formed by 3D-weave.
FIG. 7 is a view showing another embodiment of fabric-style fixing portions.
FIG. 8 is a view showing still another embodiment of fabric-style fixing portions.

### DESCRIPTION OF EMBODIMENTS

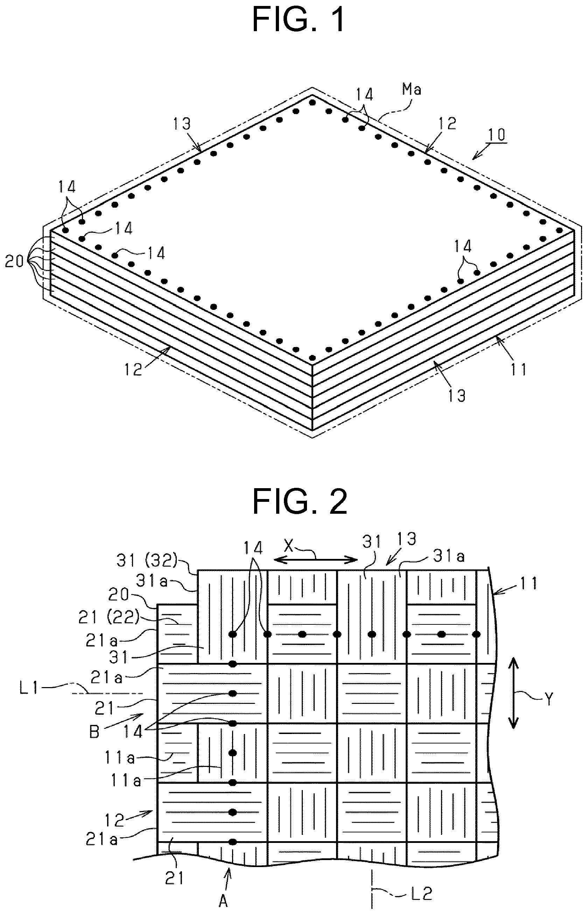

A fiber structure and a fiber-reinforced composite material according to an embodiment of the present invention will now be described with reference to FIG. 1 to FIG. 5.

Referring to FIG. 1, a fiber-reinforced composite material 10 is formed by impregnating a reinforcing base material being a fiber structure 11 made of a multilayer fabric with matrix resin Ma. As the matrix resin Ma, for example, thermosetting epoxy resin is used. The fiber structure 11 is formed by laminating a plurality of fabrics 20.

Referring to FIG. 2, each fabric 20 is formed by interlacing a plurality of warps 21 with a plurality of wefts 31, and has a rectangular shape in a plan view. The warps 21 and the wefts 31 correspond to first yarns and second yarns, respectively. Each fabric 20 is formed by plain weave to interlace the warps 21 and the wefts 31. The wefts 31 are arranged orthogonally to the warps 21. The warps 21 and the wefts 31 are made of discontinuous fibers 11a. Organic fibers and inorganic fibers that are the reinforcing fibers may be used as the discontinuous fibers 11a. The organic fibers include aramid fibers, poly(p-phenylenebenzobisoxazole) fibers, ultra-high molecular weight polyethylene fibers, and the like. The inorganic fibers include carbon fibers, glass fibers, ceramic fibers, and the like. The form of yarn bundles made of the discontinuous fibers 11a includes a spun yarn, a stretch-broken yarn, and the like.

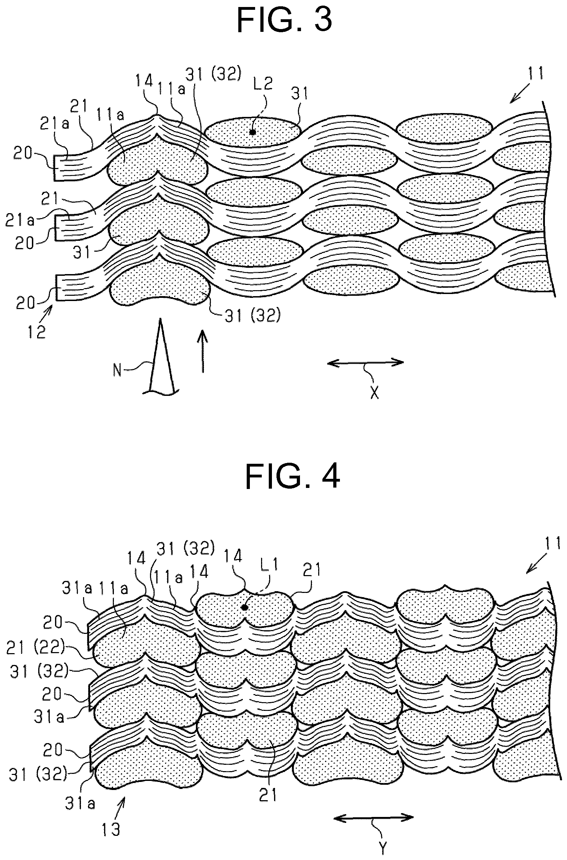

The direction in which a yarn main axis L1 of the warps 21 extends is defined as the first direction X of the fiber structure 11. The direction in which a yarn main axis L2 of the wefts 31 extends, and orthogonal to the first direction X is defined as the second direction Y of the fiber structure 11. The plurality of the warps 21 are arranged side by side in the second direction Y of the fiber structure 11 and parallel to each other in the fiber structure 11. Furthermore, the plurality of the wefts 31 are arranged side by side in the first direction X of the fiber structure 11 and parallel to each other in the fiber structure 11. Referring to FIG. 3, the fabrics 20 overlapped in the lamination direction are configured such that the warps 21 of one fabric 20 overlap with the wefts 31 of the other fabric 20 in the fiber structure 11. The one fabric 20 is laminated on the other fabric 20. The fabrics 20 overlapped in the lamination direction are bound in the lamination direction by binder yarns (not shown).

Referring to FIG. 2, the fiber structure 11 includes opposite first fabric edges 12 of the multilayer fabric where the ends 21a of the warps 21 are located in a yarn main axis direction of the warps 21 (the first direction X). In each of the first fabric edges 12, the wefts 31 are located more inside than the end 21a of the warps 21 in the first direction X (closer to the center of the fiber structure 11). Of the plurality of the wefts 31 arranged side by side in the first direction X forming the second fabric edge 13, the outermost weft 31 located closest to the ends 21a of the warps 21 and at the outermost side is an outermost weft 32 as the outermost yarn. In this case, the warps 21 correspond to one of the two types of yarns, and the wefts 31 correspond to the other of the two types of yarns. The outermost weft 32 is arranged beside the ends 21a of the warps 21. Therefore, in the first fabric edge 12, the outermost weft 32 is located at a position closer to the center of the fiber structure 11 than the end 21a of the warps 21.

The fiber structure 11 includes opposite second fabric edges 13 of the multilayer fabric where the ends 31a of the wefts 31 are located in the yarn main axis direction of the wefts 31 (the second direction Y). In each of the second fabric edges 13, the warps 21 are located more inside than the end 31a of the wefts 31 in the second direction Y (closer to the center of the fiber structure 11). Of the plurality of the warps 21 arranged side by side in the second direction Y forming the first fabric edge 12, the outermost warp 21 located closest to the ends 31a of the wefts 31 and at the outermost side is an outermost warp 22 as the outermost yarn. In the second fabric edge 13, the outermost warp 22 is located at a position closer to the center of the fiber structure 11 than the end 31a of the wefts 31. In this case, the wefts 31 correspond to the one of the two types of yarns, and the warps 21 correspond to the other of the two types of yarns. The outermost warp 22 is arranged beside the ends 31a of the wefts 31.

The fiber structure 11 includes fabric-style fixing portions 14 in each of the first fabric edges 12 and each of the second fabric edges 13. The fabric-style fixing portions 14 disposed in the first fabric edge 12 are formed by needle punching on the outermost weft 32.

Referring to FIG. 3 or FIG. 4, the fabric-style fixing portions 14 disposed in the first fabric edge 12 are formed to entangle the discontinuous fibers 11a of the outermost weft 32 and the warps 21 overlapping the outermost weft 32 in the lamination direction with each other in each fabric 20. In other words, the fabric-style fixing portions 14 disposed in the first fabric edge 12 are formed to entangle the discontinuous fibers 11a of the outermost weft 32 of the one fabric 20 and the warps 21 of the other fabric 20 with each other between the fabrics 20 overlapped in the lamination direction. When the fabrics 20 are punched through with a needle N at the opposite sides of each warp 21 in the width direction, the fabric-style fixing portions 14 are formed to entangle the discontinuous fibers 11a of the wefts 31 overlapped in the lamination direction with each other, which is not illustrated.

Referring to FIG. 2, the fabric-style fixing portions 14 disposed in the second fabric edge 13 are formed by needle punching on the outermost warp 22. The fabric-style fixing portions 14 disposed in the second fabric edge 13 are formed to entangle the discontinuous fibers 11a of the outermost warp 22 and the wefts 31 overlapping the outermost warp 22 in the lamination direction with each other in each fabric 20. The fabric-style fixing portions 14 disposed in the second fabric edge 13 are formed to entangle the discontinuous fibers 11a of the outermost warp 22 of the one fabric 20 and the wefts 31 of the other fabric 20 with each other between the fabrics 20 overlapped in the lamination direction. When the fabrics 20 are punched through with a needle N at the opposite sides of each weft 31 in the width direction, the fabric-style fixing portions 14 are formed to entangle the discontinuous fibers 11a of the wefts 31 overlapped in the lamination direction with each other, which is not illustrated.

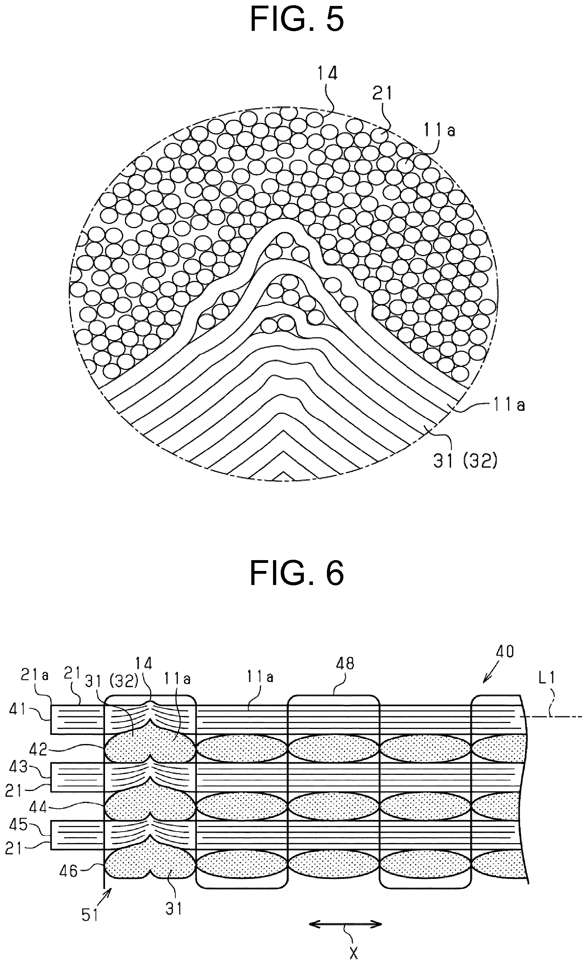

Referring to FIG. 5, in the fabric-style fixing portions 14 of the configuration described above, the discontinuous fibers 11a are twisted and entangled in a complicated manner between the warps 21 and the wefts 31, between the warps 21, and between the wefts 31, overlapped in the lamination direction. The warps 21 and the wefts 31 are made of the discontinuous fibers 11a, so that the discontinuous fibers 11a are entangled in many portions at the fabric-style fixing portions 14.

The fiber structure 11 made of a multilayer fabric configured as described above is impregnated with matrix resin Ma, and then the matrix resin Ma is cured, thereby producing the fiber-reinforced composite material 10. The impregnation and the cure of the matrix resin Ma is performed by, for example, RTM (resin transfer molding) method. When the fiber structure 11 is impregnated with the matrix resin Ma and the matrix resin Ma is cured, the warps 21 and the wefts 31 of the fiber structure 11 are combined with the matrix resin Ma to produce the fiber-reinforced composite material 10.

The following will describe an operation of the fiber structure 11 and the fiber-reinforced composite material 10. The fabric-style fixing portions 14 disposed in the fiber structure 11 prevent the fraying in the first fabric edge 12 and the second fabric edge 13.

The above-described embodiment has the following advantages.
(1) The fabric-style fixing portions 14 are formed by entangling the reinforcing fibers of yarns of the warps 21 and the wefts 31 overlapped in the lamination direction of the multilayer fabric. Therefore, the fraying of the first fabric edge 12 and the second fabric edge 13 is prevented without using a separate member, resulting in saving of a manufacturing cost.
   Furthermore, in the fiber-reinforced composite material 10 formed by the fiber structure 11, the fraying is prevented without using a separating member. This means that, unlike the case in which separating members are added to prevent the fraying, a failure in impregnation of the matrix resin Ma (an adverse effect on the combining of the matrix resin Ma) does not occur, and the fiber-reinforced composite material 10 does not lower a strength on account of separate members.
(2) The fabric-style fixing portions 14 disposed in the first fabric edge 12 are formed by needle punching on the outermost weft 32. This needle punching entangles the discontinuous fibers 11a of the outermost weft 32 having a possibility of being pulled out from the first fabric edge 12 and the warps 21 with each other, thereby preventing the outermost weft 32 from being pulled out. Furthermore, the fabric-style fixing portions 14 disposed in the second fabric edge 13 are formed by needle punching on the outermost warp 22. This needle punching entangles the discontinuous fibers 11a of the outermost warp 22 having a possibility of being pulled out from the second fabric edge 13 and the wefts 31, thereby preventing the outermost warp 22 from being pulled out.
(3) The fabric-style fixing portions 14 disposed in each of the first fabric edges 12 and in each of the second fabric edges 13 are formed by needle punching on the outermost weft 32 and on the outermost warp 22, respectively. Therefore, the fiber structure 11 does not have the fabric-style fixing portions 14 more inside than the outermost weft 32 in the first direction X (closer to the center of the fiber structure 11), and more inside than the outermost warp 22 in the second direction Y (closer to the center of the fiber structure 11). As a result, in the produced fiber-reinforced composite material 10, the twisting of the discontinuous fibers 11a caused by forming the fabric-style fixing portions 14 is minimized, resulting in minimizing of the reduction in the strength of the fiber-reinforced composite material 10.
(4) The warps 21 and the wefts 31 are made of the discontinuous fibers 11a. Thus, in the fabric-style fixing portions 14, the discontinuous fibers 11a are entangled in many portions between the warps 21 and the wefts 31, between the warps 21, and between the wefts 31, overlapped in the lamination direction. Therefore, the fraying in the fabric-style fixing portions 14 is prevented, that is, the fraying in the first fabric edge 12 and the second fabric edge 13 is also prevented effectively.

The above embodiment may be modified as follows.

The warps 21 and the wefts 31 need not necessarily be made of the discontinuous fibers 11a, and may be continuous yarns which are formed by bundling several hundreds to several tens of thousands of continuous fibers.

As shown in FIG. 6, a fiber structure 40 may be a multilayer fabric formed by 3D-weave. The fiber structure 40 includes warp layers 41, 43, 45 in each of which the warps 21 corresponding to the first yarns are arranged parallel to each other, and weft layers 42, 44, 46 in each of which the wefts 31 corresponding to the second yarns are arranged to each other. Specifically, the fiber structure 40 includes the first warp layer 41, the first weft layer 42, the second warp layer 43, the second weft layer 44, the third warp layer 45, and the third weft layer 46 in this order from top to bottom.

In the fiber structure 40, the first warp layer 41, the first weft layer 42, the second warp layer 43, the second weft layer 44, the third warp layer 45, and the third weft layer 46 are bound by binder yarns 48 in the lamination direction. The binder yarns 48 are warps used for holding the shape of the fiber structure 40.

The fiber structure 40 includes the fabric-style fixing portions 14 in opposite first fabric edges 51 in which the ends 21a of the warps 21 are located in the yarn main axis direction of the warps 21. Furthermore, the fiber structure 40 includes the fabric-style fixing portions 14 in opposite second fabric edges in which the ends 31a of the wefts 31 are located in the yarn main axis direction of the wefts 31, which is not illustrated.

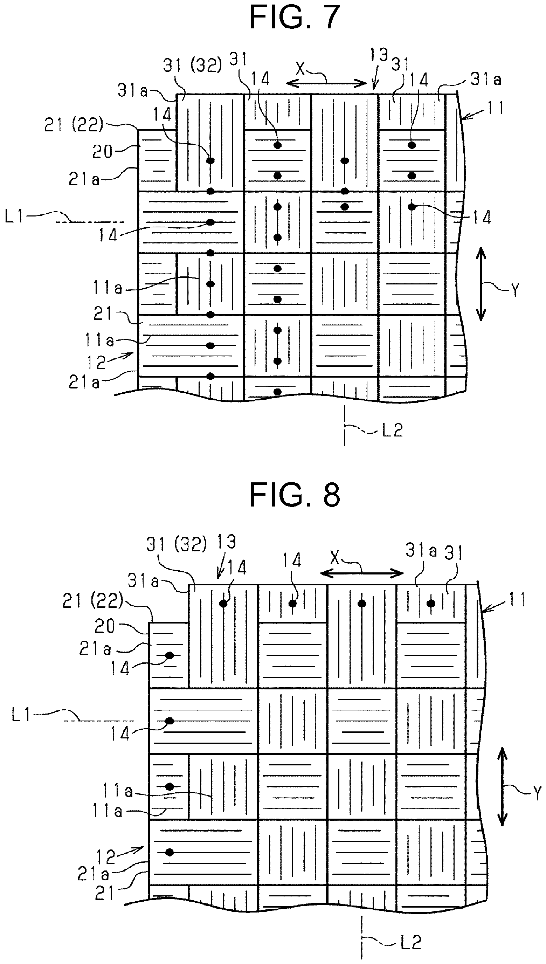

As shown in FIG. 7, in each first fabric edge 12, a plurality of the fabric-style fixing portions 14 may be disposed along the first direction X by needle punching on the wefts 31 which are located more inside than the outermost weft 32 in the first direction X. Similar to the first fabric edge 12, in each second fabric edge 13, a plurality of the fabric-style fixing portions 14 may be disposed along the second direction Y by needle punching on the warps 21 which are located more inside than the outermost warp 22 in the second direction Y.

As shown in FIG. 8, in each first fabric edge 12, the fabric-style fixing portions 14 may be disposed only in the ends 21a of the warps 21 which are located more outside than the outermost weft 32 in the first direction X. In other words, the fabric-style fixing portions 14 may be disposed in the ends 21a of the warps 21 that are located closer to the ends than the outermost weft 32 in the yarn main axis direction of the warps 21 corresponding to the one of the two types of yarns (in the first direction X). Similar to the first fabric edge 12, in each second fabric edge 13, the fabric-style fixing portions 14 may be disposed only in the ends 31a of the wefts 31 which are located more outside than the outermost warp 22 in the second direction Y. In other words, the fabric-style fixing portions 14 may be disposed in the ends 31a of the wefts 31 that are located closer to the ends than the outermost warp 22 in the yarn main axis direction of the wefts 31 corresponding to the one of the two types of yarns (in the second direction Y).

With this configuration, in the first fabric edge 12, the discontinuous fibers 11a are entangled between the warps 21 overlapped in the lamination direction in the ends 21a closer to the ends in the yarn main axis direction of the warps 21 than the outermost weft 32, so that the outermost weft 32 is prevented from being pulling out over the ends 21a of the warps 21. Similar to the first fabric edge 12, in the second fabric edge 13, the discontinuous fibers 11a are entangled between the wefts 31 overlapped in the lamination direction in the ends 31a closer to the ends in the yarn main axis direction of the wefts 31 than the outermost warp 22, so that the outermost warp 22 is prevented from being pulling out over the end 31a of the wefts 31. Thus, forming the fabric-style fixing portions 14 prevent the fraying in the fabric edge 12, 13. The fabric-style fixing portions 14 are formed such that the discontinuous fibers 11a are entangled between the warps 21 overlapped in the lamination direction, and between the wefts 31 overlapped in the lamination direction. Therefore, no separate members are needed to prevent the fraying in the fabric edge 12, 13.

The fabric-style fixing portions 14 may be added by needle punching on the outermost weft 32 in each first fabric edge 12 and on the outermost warp 22 in each second fabric edge 13. Owing to this addition, both the fabric-style fixing portions 14 which are located on the outermost weft 32 and the fabric-style fixing portions 14 which are located on the ends 21a of the warps 21 cooperate to effectively prevent the fraying in the first fabric edge 12. Similar to the first fabric edge 12, both the fabric-style fixing portions 14 which are located on the outermost warp 22 and the fabric-style fixing portions 14 which are located on each end 31a of the wefts 31 cooperate to effectively prevent the fraying in the second fabric edge 13.

The fabric-style fixing portions 14 may be disposed in only either the first fabric edges 12 and the second fabric edges 13 in the fiber structure 11, and in only either the first fabric edges 51 and the second fabric edges in the fiber structure 40. In this case, the opposite edges on the upstream and downstream sides in the weaving direction of the fiber structures 11, 40 are cut after the fiber structures 11, 40 are completed. Therefore, the fabric-style fixing portions 14 may be disposed only in the cut edges and may not be disposed in the opposite sides in the weaving width direction.

Although needle punching is applied as a method to form the fabric-style fixing portions 14, tufting may be applied. Besides needle punching and tufting, any method may be applied if the reinforcing fibers (the discontinuous fibers 11a) are entangled with each other between adjacent layers.

Although the fabrics 20 are formed by plain weave in the above embodiment, the fabrics 20 may be formed by satin weave or twill weave.

The number of laminated weft layers and warp layers may be changed as required in the fiber structure 40.

When the fiber structures 11, 40 are used as a reinforcing base material of the fiber-reinforced composite material 10, the type of matrix resin and the method for manufacturing the fiber-reinforced composite material 10 are not limited to any particular resin or method.

Next, the following will describe a technical idea comprehended from the above embodiment and the modifications.
(1) In the fiber structure, the fabric-style fixing portions are formed by needle punching.

### Reference Signs List

- Ma: matrix resin
- 10: fiber-reinforced composite material
- 11, 40: fiber structure
- 11a: discontinuous fiber
- 12, 51: first fabric edge
- 13: second fabric edge
- 14: fabric-style fixing portion
- 20: fabric
- 21: warp corresponding to the first yarn
- 21a, 31a: end
- 22: outermost warp corresponding to the outermost yarn
- 31: weft corresponding to the second yarn
- 32: outermost weft corresponding to the outermost yarn

## Claims

1. A fiber structure comprising:
a multilayer fabric including:
first yarns; and
second yarns arranged orthogonally to the first yarns,
the first yarns and the second yarns being bundles of reinforcing fibers, wherein
the fiber structure includes:
a first fabric edge of the multilayer fabric where ends of the first yarns are located in a yarn main axis direction of the first yarns;
a second fabric edge of the multilayer fabric where ends of the second yarns are located in a yarn main axis direction of the second yarns; and
fabric-style fixing portions disposed in at least one of the first fabric edge and the second fabric edge,
the fabric-style fixing portions are formed by entangling the reinforcing fibers of yarns of the first yarns and the second yarns overlapped in a lamination direction of the multilayer fabric,
the fabric-style fixing portions are formed in at least one of an outermost yarn and ends of one of the two types of yarns, wherein
of the one of the two types of yarns arranged side by side in a yarn main axis direction of the other of the two types of yarns forming the fabric edges, the outermost yarn is located closest to the ends of the other of the two types of yarns,
the ends of the one of the two types of yarns are located closer to the ends than the outermost yarn in the yarn main axis direction of the one of the two types of yarns.

2. The fiber structure according to claim 1, wherein the fabric-style fixing portions are disposed only in the outermost yarn.

3. The fiber structure according to claim 1 or 2, wherein the first yarns and the second yarns are made of discontinuous fibers.

4. The fiber structure according to any one of claims 1 to 3, wherein the fabric-style fixing portions are formed by needle punching.

5. A fiber-reinforced composite material formed by impregnating a reinforcing base material being the fiber structure with matrix resin, wherein
the fiber structure is a fiber structure according to any one of claims 1 to 4.

## Amended claims

### Amended claims under Art. 19.1 PCT

1. (amended) A fiber structure comprising:
a multilayer fabric including:
first yarns; and
second yarns arranged orthogonally to the first yarns,
the first yarns and the second yarns being bundles of reinforcing fibers, wherein,
the fiber structure includes:
a first fabric edge of the multilayer fabric where ends of the first yarns are located in a yarn main axis direction of the first yarns;
a second fabric edge of the multilayer fabric where ends of the second yarns are located in a yarn main axis direction of the second yarns; and
fabric-style fixing portions disposed in only either the first fabric edge or the second fabric edge, or only both the first fabric edge and the second fabric edge,
the fabric-style fixing portions are formed by entangling the reinforcing fibers of yarns of the first yarns and the second yarns overlapped in a lamination direction of the multilayer fabric,
the fabric-style fixing portions are formed in at least one of an outermost yarn and ends of one of the two types of yarns, wherein
of the one of the two types of yarns arranged side by side in a yarn main axis direction of the other of the two types of yarns forming the fabric edges, the outermost yarn is located closest to the ends of the other of the two types of yarns,
the ends of the one of the two types of yarns are located closer to the ends than the outermost yarn in the yarn main axis direction of the one of the two types of yarns.

2. The fiber structure according to claim 1, wherein the fabric-style fixing portions are disposed only in the outermost yarn.

3. The fiber structure according to claim 1 or 2, wherein the first yarns and the second yarns are made of discontinuous fibers.

4. The fiber structure according to any one of claims 1 to 3, wherein the fabric-style fixing portions are formed by needle punching.

5. A fiber-reinforced composite material formed by impregnating a reinforcing base material being the fiber structure with matrix resin, wherein
the fiber structure is a fiber structure according to any one of claims 1 to 4.

Statement under Art. 19.1 PCT
Claim1. clarified that the fiber structure includes fabric-style fixing portions disposed in only either the first fabric edge or the second fabric edge, or only both the first fabric edge and the second fabric edge.

Citation 1 is considered as regarding to an invention of fibrous preform that is formed by needle punching everywhere.

Citation 2 is considered as regarding to an invention of fiber structure that is formed by needle punching everywhere.

Citation 1 and 2 do not disclose that the fiber structure described in Claim 1 of the present application includes fabric-style fixing portions disposed in only either the first fabric edge or the second fabric edge, or only both the first fabric edge and the second fabric edge.

The present invention relates to the fiber structure that includes a multilayer fabric including first yarns and second yarns. The fiber structure includes a first fabric edge wherein ends of the first yarns are located in a yarn main axis direction of the first yarns, and a second fabric edge wherein ends of the second yarns are located in a yarn main axis direction of the second yarns. The fiber structure includes fabric-style fixing portions disposed in only either the first fabric edge or the second fabric edge, or only both the first fabric edge and the second fabric edge. On the other hand, the fiber structure does not include fabric-style fixing portions inside the fiber structure (closer to the center of the fiber structure). Forming the fabric-style fixing portions in only the fabric edges in such a configuration minimizes the twisting of the reinforcing fibers that form the first yarns and the second yarns caused by forming the fabric-style fixing portions, resulting in minimizing of the reduction in the strength.
